# EUROPÄISCHE PATENTANMELDUNG

(11) **EP 1 710 135 A1**
(43) Veröffentlichungstag der Anmeldung: **11.10.2006**
(21) Anmeldenummer: 05007554.8
(22) Anmeldetag: 06.04.2005
(51) Int. Cl.: B60R 21/20

(54) **Luftsackmodul für ein Kraftfahrzeug**

(71) Anmelder: Delphi Technologies, Inc., Troy, MI 48007 (US)
(72) Erfinder: Guthke, Detlev, 58089 Hagen (DE); Maiwald, Helmut, 51515 Kürten (DE); Tessarek, Artur, 44797 Bochum (DE)
(74) Vertreter: Manitz, Finsterwald & Partner GbR

(57) **Zusammenfassung**

Die Erfindung betrifft ein Luftsackmodul für ein Kraftfahrzeug mit einem aufblasbaren Luftsack, der im Montagezustand zu einem Paket zusammengefaltet ist, das von einem lediglich stellenweise wirksamen Haltemittel zusammengehalten ist, welches verglichen mit der Paketoberfläche kleine Abmessungen aufweist und zumindest einen zusammenhängenden, verglichen mit den Abmessungen des Haltemittels großen Bereich der Paketoberfläche freilässt.

## Beschreibung

Die Erfindung betrifft ein Luftsackmodul für ein Kraftfahrzeug mit einem aufblasbaren Luftsack, der im Montagezustand zu einem Paket zusammengefaltet ist.

Ein derartiges Luftsackmodul ist grundsätzlich bekannt. Ist ein solches Luftsackmodul zur Befestigung an einem Dachrahmen des Kraftfahrzeugs vorgesehen, so wird es auch "roof rail airbag" genannt. Üblicherweise umfasst ein bekanntes Luftsackmodul eine Hülle aus einem harten oder weichen Material, die den zusammengefalteten Luftsack gehäuse- oder strumpfartig umgibt und das Luftsackpaket zusammenhält.

Als problematisch erweist sich bei einem solchen Luftsackmodul der wirtschaftliche Aufwand bei der Herstellung und Montage der Luftsackhülle. Darüber hinaus kann insbesondere eine aus einem festen Material gebildete Luftsackhülle die Baugröße und somit den Platzbedarf des Luftsackmoduls erheblich erhöhen, was sich beim Einbau des Luftsackmoduls in ein Kraftfahrzeug, insbesondere im Bereich eines Dachrahmens des Kraftfahrzeugs, nachteilig auswirken kann.

Der Erfindung liegt die Aufgabe zugrunde, ein Luftsackmodul zu schaffen, welches mit einem geringeren wirtschaftlichen Aufwand herstellbar ist und eine geringere Baugröße aufweist.

Zur Lösung der Aufgabe ist ein Luftsackmodul mit den Merkmalen des Anspruchs 1 vorgesehen.

Das erfindungsgemäße Luftsackmodul umfasst einen aufblasbaren Luftsack, der im Montagezustand zu einem Paket zusammengefaltet ist, das von einem lediglich stellenweise wirksamen Haltemittel zusammengehalten ist, welches verglichen mit der Paketoberfläche kleine Abmessungen aufweist und zumindest einen zusammenhängenden, verglichen mit den Abmessungen des Haltemittels großen Bereich der Paketoberfläche freilässt.

Der Erfindungsgedanke besteht mit anderen Worten darin, das zusammengefaltete Luftsackpaket nicht vollständig in ein steifes Gehäuse einzuschließen oder mit einer strumpfartigen Hülle zu überziehen, sondern ein vergleichsweise kleines Haltemittel vorzusehen, welches lediglich stellenweise mit dem zusammengefalteten Luftsackpaket zusammenwirkt, um dieses zusammenzuhalten.

Das Haltemittel weist verglichen mit der Paketoberfläche kleine Abmessungen auf und lässt zumindest einen zusammenhängenden, verglichen mit den Abmessungen des Haltemittels großen Bereich der Paketoberfläche frei. Das Haltemittel überdeckt somit lediglich einen kleinen Anteil der Oberfläche des zusammengefalteten Luftsackpakets. Optimalerweise sind die Abmessungen des Haltemittels nicht wesentlich größer als für ein wirksames Zusammenhalten des Pakets nötig.

Bei der Herstellung des erfindungsgemäßen Luftsackmoduls muss also weder ein Gehäuse zum Zusammenhalten des Luftsackpakets bereitgestellt werden, noch das Luftsackpaket mit einer strumpfartigen Hülle überzogen werden. Vielmehr wird nach dem Zusammenfalten des Luftsacks das Luftsackpaket lediglich durch ein vergleichsweise kleines Haltemittel, das an einer geeigneten Stelle des zusammengefalteten Luftsackpakets angebracht ist, zusammengehalten. Dadurch ist die Herstellung des Luftsackmoduls erheblich vereinfacht und somit sowohl hinsichtlich der Material- als auch der Montagekosten reduziert.

Das Haltemittel kann bereits bei der Herstellung des Luftsacks an diesem angebracht werden, indem beispielsweise ein Ende des Haltemittels an den Luftsack angenäht wird. Das Haltemittel kann auch dadurch ein integraler Bestandteil der Luftsackhülle sein, dass es beim Zuschneiden oder Zusammennähen der Luftsackhülle mit ausgebildet wird. Separate Haltemittel werden so nicht benötigt. Im zusammengefalteten Zustand des Luftsacks braucht dann lediglich noch das Haltemittel insbesondere mit einem freien Ende an geeigneter Stelle am Luftsack fixiert zu werden, um das Luftsackpaket zusammenzuhalten. Die Herstellung des Luftsackmoduls wird auf diese Weise noch weiter vereinfacht und hinsichtlich der Material- und Montagekosten noch weiter reduziert.

Darüber hinaus trägt das Haltemittel aufgrund seiner kleinen Abmessungen nicht wesentlich auf, d.h. die Baugröße des Luftsackmoduls wird durch das Haltemittel nicht wesentlich erhöht. Die Abmessungen des Luftsackmoduls sind mit anderen Worten durch die Größe und Form des zusammengefalteten Luftsackpakets vorgegeben. Das Luftsackmodul kann also besonders Platz sparend in ein Kraftfahrzeug eingebaut werden. Dies erweist sich besonders dann als vorteilhaft, wenn das Luftsackmodul als ein so genannter "roof rail airbag" im Bereich eines Dachrahmens des Kraftfahrzeugs eingebaut werden soll, da hier typischerweise besonders wenig Platz zur Verfügung steht.

Vorteilhafte Ausführungsformen der Erfindung sind den Unteransprüchen, der Beschreibung und der Zeichnung zu entnehmen.

Bevorzugt ist das Haltemittel unter Ausnutzung einer dem Luftsackpaket zumindest im freigelassenen Bereich innewohnenden Formstabilität positioniert. Das Haltemittel ist mit anderen Worten so an dem Luftsackpaket angebracht, dass das Paket trotz der kleinen Abmessungen des Haltemittels wirksam zusammengehalten wird und sich nicht etwa unbeabsichtigt entfalten oder anders verformen, z.B. durchbiegen, kann.

Das Haltemittel kann streifenförmig mit einer Breite ausgebildet sein, die wesentlich kleiner als die Länge und/oder der Umfang des Luftsackpakets ist. Ein derartiges streifenförmiges Haltemittel weist nicht nur besonders kleine Abmessungen auf, sondern es lässt sich auch besonders vielseitig einsetzen und beispielsweise parallel oder quer zu einer Längserstreckung des Luftsackpakets an diesem anbringen.

Vorzugsweise ist der Luftsack nach Art einer Rollfaltung zusammengefaltet. Die Rollfaltung ermöglicht nicht nur eine besonders einfache Herstellung des Luftsackpakets und somit letztlich des Luftsackmoduls, nämlich durch einfaches Aufwickeln oder Aufrollen des Luftsacks, sondern sie ermöglicht auch eine besonders schnelle Expansion des Luftsacks im Falle einer Aktivierung des Luftsackmoduls bei einem Unfall. Darüber hinaus weist ein nach Art einer Rollfaltung zusammengefaltetes Luftsackpaket eine besonders hohe Formstabilität auf. Diese ist vor allem in Längsrichtung des Luftsackpakets, d.h. in Richtung der Rollachse, besonders hoch, wodurch das zusammengefaltete Luftsackpaket selbst durch ein lediglich stellenweise wirksames Haltemittel zuverlässig zusammenhaltbar ist.

Grundsätzlich ist die Art der Faltung des Luftsacks beliebig, sie kann anstelle einer Rollfaltung beispielsweise auch als U-Faltung oder als eine Kombination von U- und Rollfaltung ausgebildet sein. Entscheidend ist, dass der zusammengefaltete Luftsack an wenigstens einer Stelle paketartig verschließbar ist.

Gemäß einer vorteilhaften Ausbildung der Erfindung umgibt das Haltemittel das Luftsackpaket manschettenartig. Dadurch ist das Luftsackpaket besonders sicher zusammengehalten.

Bevorzugt umfasst das Haltemittel eine oder mehrere zueinander beabstandete Schlaufen. Durch ein derartiges Haltemittel ist die Herstellung des Luftsackmoduls noch weiter vereinfacht. Dabei muss eine Schlaufe im Sinne der Erfindung weder geschlossen sein, noch das Luftsackpaket vollständig umgeben. Vielmehr gilt auch ein solches Haltemittel als Schlaufe, welches das Luftsackpaket z.B. zumindest zur Hälfte umgibt. In diesem Fall bildet gewissermaßen der verbleibende Abschnitt des Luftsacks selbst einen Teil der Schlaufe.

Der zusammengefaltete Luftsack kann im Bereich seitlicher Enden jeweils von einer Schlaufe oder Manschette umgeben sein. Bei einer derartigen Anordnung der Schlaufen bzw. Manschetten ist ein, insbesondere nach Art einer Rollfaltung zusammengefalteter, Luftsack besonders sicher zusammengehalten. Insbesondere wird bei einer derartigen Anordnung der Schlaufen bzw. Manschetten die aus der Rollfaltung resultierende Eigenstabilität des Luftsackpakets optimal ausgenutzt.

Besonders vorteilhaft ist es, wenn wenigstens ein Ende der oder jeder Schlaufe bzw. Manschette an einem insbesondere laschenartigen Befestigungsabschnitt des Luftsacks angebracht ist, welcher zur Befestigung des Luftsacks an einem Kraftfahrzeug, insbesondere an einem Dachrahmen des Kraftfahrzeugs, vorgesehen ist. Vorzugsweise ist der Befestigungsabschnitt ein integraler Bestandteil der Luftsackhülle. Der Befestigungsabschnitt des Luftsacks erfüllt eine Doppelfunktion, indem er nicht nur zur Befestigung des Luftsacks an dem Kraftfahrzeug, sondern auch zur Fixierung der oder jeder Schlaufe bzw. Manschette dient. Dies vereinfacht die Herstellung des Luftsackmoduls noch weiter und reduziert insbesondere die bei der Herstellung des Luftsackmoduls anfallenden Material- und Montagekosten.

Das Ende der oder jeder Manschette bzw. Schlaufe kann mittels eines zur Befestigung des Luftsackmoduls in dem Kraftfahrzeug vorgesehenen Befestigungsmittels, z.B. eines Clips, einer Schraube oder einer Niete, an dem Befestigungsabschnitt des Luftsacks angebracht sein. Das Befestigungsmittel wird mit anderen Worten nicht nur zur Befestigung des Luftsacks an dem Kraftfahrzeug, sondern gleichzeitig auch zur Befestigung der oder jeder Schlaufe bzw. Manschette an dem Befestigungsabschnitt ausgenutzt. Aufgrund dieser Doppelfunktion des Befestigungsmittels wird die Herstellung des Luftsackmoduls noch weiter vereinfacht und werden die Material- und Montagekosten bei der Herstellung des Luftsackmoduls noch weiter reduziert.

Gemäß einer weiteren bevorzugten Ausbildung der Erfindung deckt das Haltemittel lediglich solche Bereiche des Luftsacks ab, welche an einen durch den zusammengefalteten Luftsack gebildeten Spalt angrenzen. Das Haltemittel überbrückt also den Spalt und hält das zusammengefaltete Luftsackpaket wie ein Verschluss zusammen.

Indem das Haltemittel lediglich an den Spalt angrenzende Bereiche des Luftsacks abdeckt, erstreckt sich das Haltemittel gerade soweit über den Luftsack, wie es für einen sicheren Zusammenhalt des Luftsackpakets erforderlich ist. Dadurch werden minimale Abmessungen des Haltemittels und letztlich eine minimale Baugröße des Luftsackmoduls erreicht.

Vorteilhafterweise überbrückt das Haltemittel den Spalt zumindest abschnittsweise und bevorzugt über annähernd dessen gesamte Länge. Dadurch wird das Luftsackpaket noch sicherer zusammengehalten. Außerdem ist der Spalt vor einem Eindringen von Fremdkörpern geschützt.

Bevorzugt ist das Haltemittel im Bereich eines Endes mittels einer Klebe-, Näh-, Heft- oder Nietverbindung an dem Luftsack befestigt. Das Haltemittel kann aber auch einen integralen Bestandteil der Luftsackhülle bilden und so gewissermaßen aus dem Luftsack selbst hervorgehen. In beiden Fällen kann der Luftsack bereits bei seiner Herstellung mit dem Haltemittel versehen werden. Dies bedeutet eine noch weitere Vereinfachung der Herstellung des Luftsackmoduls.

Besonders vorteilhaft ist es ferner, wenn das Haltemittel eine Solltrennstelle und insbesondere eine Reißnaht aufweist. Eine derartige Solltrennstelle erleichtert eine Öffnung des Haltemittels und somit das Auseinanderfalten des Luftsackpakets bei einem Unfall. Im Ergebnis wird dadurch eine schnellere Expansion des Luftsacks im Falle einer Aktivierung des Luftsackmoduls ermöglicht.

Nachfolgend wird die Erfindung rein beispielhaft anhand zweier vorteilhafter Ausführungsformen unter Bezugnahme auf die Zeichnung beschrieben. Es zeigen:
- Fig. 1: eine Explosionsansicht einer ersten Ausführungsform des erfindungsgemäßen Luftsackmoduls;
- Fig. 2: eine perspektivische Ansicht des Luftsackmoduls von Fig. 1;
- Fig. 3: eine Explosionsansicht einer zweiten Ausführungsform des erfindungsgemäßen Luftsackmoduls; und
- Fig. 4: eine perspektivische Ansicht des Luftsackmoduls von Fig. 3.

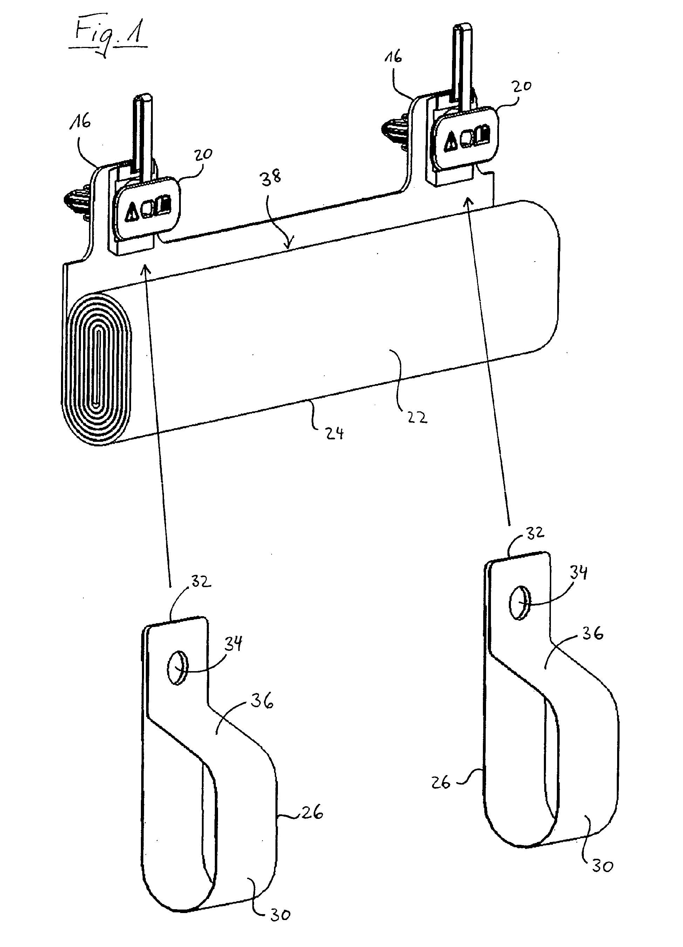

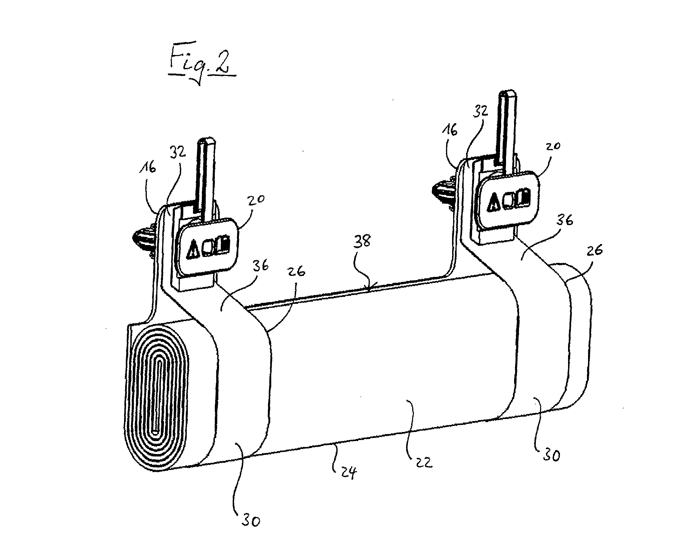

In Fig. 1 und 2 ist eine erste Ausführungsform des erfindungsgemäßen Luftsackmoduls 10 dargestellt. Das Luftsackmodul 10 ist zur Befestigung an einem Dachrahmen eines Kraftfahrzeugs vorgesehen, es handelt sich mit anderen Worten also um einen so genannten "roof rail airbag".

Das Luftsackmodul 10 umfasst einen Luftsack 22, der mehrere laschenartig ausgebildete und zueinander beabstandete Befestigungsabschnitte 16 aufweist, welche zur Befestigung des Luftsackmoduls 10 an dem Dachrahmen des Kraftfahrzeugs dienen.

Jeder Befestigungsabschnitt 16 weist einen nicht gezeigten Durchgang auf, durch den sich ein Clipselement 20 hindurch erstreckt, welches zur Fixierung des Luftsackmoduls 10 an dem Dachrahmen des Kraftfahrzeugs dient. Die Befestigungsabschnitte 16 sind integrale Bestandteile der Luftsackhülle. Anstelle des Clipselements 20 kann auch eine Schraube, Niete oder ein anderes geeignetes Befestigungsmittel verwendet werden.

Der Luftsack 22 ist nach Art einer Rollfaltung zu einem Luftsackpaket 24 zusammengefaltet, mit anderen Worten also aufgerollt.

Das Luftsackpaket 24 wird durch ein Haltemittel zusammengehalten, welches bei der in Fig. 1 und 2 dargestellten Ausführungsform durch zwei Schlaufen 26 gebildet ist, die das Luftsackpaket 24 im Bereich der axialen Enden 28 des Luftsackpakets 24 umgeben.

Jede Schlaufe 26 ist aus einem streifenförmigen Materialabschnitt 30 gebildet, der im Bereich seiner freien Enden 32 jeweils eine Öffnung 34 aufweist. Die Materialabschnitte 30 sind integrale Bestandteile der Luftsackhülle und werden beim Zuschneiden oder Zusammennähen des Luftsacks gebildet, und zwar derart, dass sie mit einem Ende mit der eigentlichen Luftsackhülle verbunden sind und nach dem Aufrollen des Luftsackpaketes 24 um dieses herumgelegt und jeweils über die am freien Ende ausgebildete Öffnung 34 mittels des Clipselementes 20 an der jeweiligen Befestigungslasche 16 fixiert werden können. Die Luftsackhülle bildet also mit den Laschen 16 und den Schlaufen 26 ein zusammenhängendes Ganzes. Fig. 1 hat insofern klarstellenden Charakter.

Durch die Clipselemente 20, die durch die Öffnungen 34 der Materialabschnitte 30 und die Durchgänge der Befestigungsabschnitte 16 hindurch gesteckt werden, sind die Materialabschnitte 30 an den Befestigungsabschnitten 16 des Luftsacks 22 fixiert, und das zusammengefaltete Luftsackpaket 24 wird durch die so gebildeten Schlaufen 26 zusammengehalten.

Der Abstand zwischen den Befestigungsabschnitten 16 und somit zwischen den Schlaufen 26 ist so gewählt, dass das Luftsackpaket 24 durch eine dem Luftsack 24 innewohnende Formstabilität und insbesondere durch die Eigenstabilität der Rollfaltung auch zwischen den Befestigungsabschnitten 16 bzw. den Schlaufen 26 in Form gehalten wird. Das Luftsackpaket 24 kann sich mit anderen Worten zwischen den Schlaufen 26 bzw. den Befestigungsabschnitten 16 weder unbeabsichtigt verformen, z.B. durchbiegen, noch unbeabsichtigt entfalten.

Die streifenförmigen Materialabschnitte 30 der Schlaufen 26 weisen jeweils eine Breite auf, die wesentlich kleiner als die Länge des Luftsackpakets 24 in Richtung der Roll- oder Faltachse gesehen ist. Somit wird lediglich ein geringer Anteil der Oberfläche des Luftsackpakets 24 durch die Schlaufen 26 bedeckt.

Damit sich das Luftsackpaket 24 im Falle einer Aktivierung des Luftsackmoduls 10, beispielsweise bei einem Unfall, möglichst verzögerungsfrei entfalten und der Luftsack 22 schnell expandieren kann, weist jede Schlaufe 26 bzw. jeder Materialabschnitt 30 eine nicht gezeigte Solltrennstelle, z.B. eine Reißnaht, auf. Die Solltrennstelle ist vorzugsweise in einem Abschnitt 36 der Schlaufen 26 angeordnet, welcher einen durch den zusammengefalteten Luftsack 22 gebildeten Spalt 38 überbrückt.

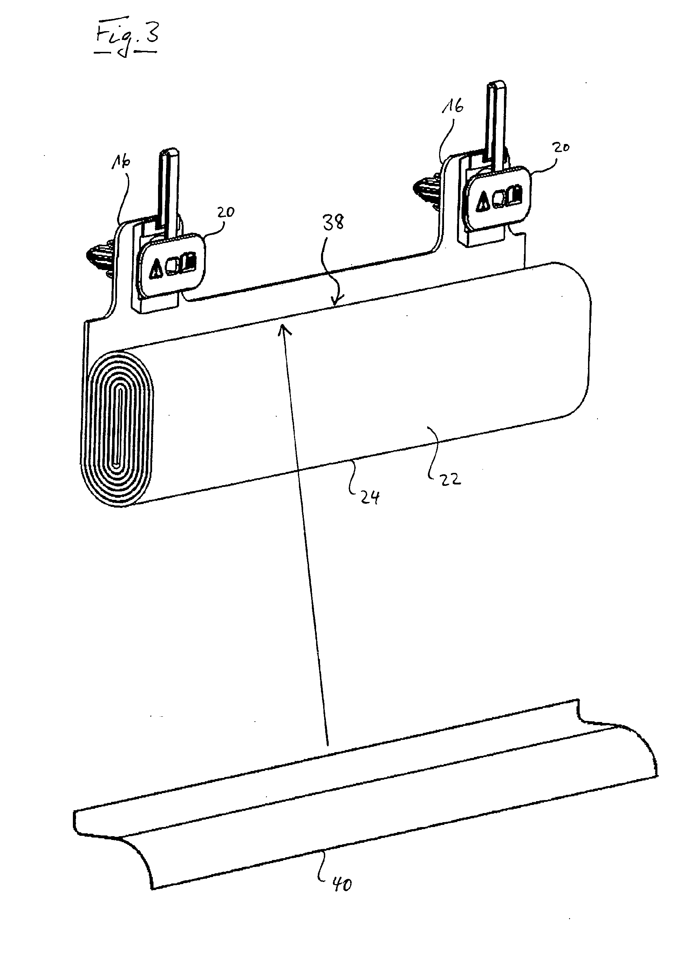

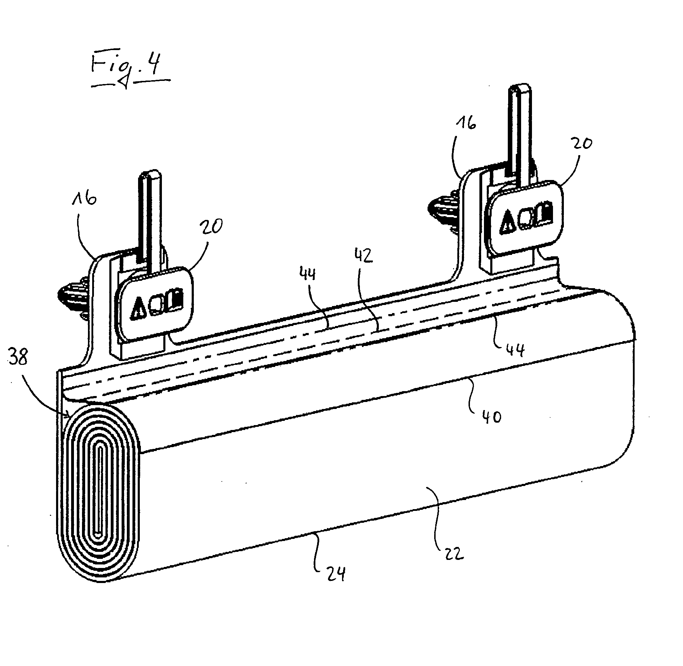

In Fig. 3 und 4 ist eine zweite Ausführungsform des erfindungsgemäßen Luftsackmoduls 10 dargestellt. Das Luftsackmodul 10 gemäß der zweiten Ausführungsform unterscheidet sich von der voranstehend in Verbindung mit Fig. 1 und 2 beschriebenen ersten Ausführungsform lediglich in der Art und Weise, wie das zusammengefaltete Luftsackpaket 24 zusammengehalten wird. Bauteile der zweiten Ausführungsform, welche denjenigen der ersten Ausführungsform in Funktion oder Bauweise entsprechen, sind deshalb mit den gleichen Bezugszeichen gekennzeichnet. Entsprechend dem ersten Ausführungsbeispiel bildet auch hier die Luftsackhülle mit Laschen 16 und Haltestreifen 40 ein zusammenhängendes Ganzes.

Bei dem Luftsackmodul 10 gemäß der zweiten Ausführungsform wird das zusammengefaltete Luftsackpaket 24 durch ein Haltemittel zusammengehalten, welches nicht durch Schlaufen 26, sondern durch einen länglichen Haltestreifen 40 gebildet ist, der im wesentlichen nur den Spalt 38 überbrückt und lediglich an den Spalt 38 angrenzende Bereiche des Luftsacks 22 bedeckt.

Die Breite des Haltestreifens 40 ist dabei so gewählt, dass der Haltestreifen 40 auf beiden Seiten des Spalts 38 jeweils nur mit einem so großen Bereich des Luftsacks 22 verbunden ist, dass eine zuverlässige Verbindung zwischen dem Haltestreifen 40 und dem Luftsack 22 auf beiden Seiten des Spalts 38 dauerhaft sichergestellt ist.

Ein sicherer Zusammenhalt des Luftsackpakets 24 wird bei der zweiten Ausführungsform des Luftsackmoduls im Wesentlichen unabhängig von der Eigenstabilität der Faltung des Luftsackpakets 24 bzw. einer dem Luftsackpaket 24 innewohnenden Formstabilität dadurch erreicht, dass sich der Haltestreifen 40 in Richtung der Rollachse gesehen im Wesentlichen über die gesamte Länge des Luftsackpakets 24 erstreckt. Dabei muss es sich bei dem Haltestreifen 40 nicht notwendigerweise um einen durchgehenden Haltestreifen 40 handeln, wie er in Fig. 3 und 4 dargestellt ist, sondern der Haltestreifen 40 kann sich auch aus mehreren zueinander beabstandeten und über die Länge des Spalts 38 verteilt angeordneten Abschnitten zusammensetzen.

Der Haltestreifen 40 kann auf der einen Seite des Spalts 38 mittels einer Klebe-, Näh-, Heft- oder Nietverbindung an dem Luftsack 22 angebracht sein.

Ferner umfasst auch der Haltestreifen 40 eine Solltrennstelle 42, bei dem vorliegenden Ausführungsbeispiel eine Reißnaht, die im Bereich des Spalts 38 angeordnet ist und sich in Richtung der Rollachse gesehen über die gesamte Länge des Haltestreifens 40 erstreckt (Fig. 4).

Die in Fig. 4 gezeigten und parallel zur Solltrennstelle 42 verlaufenden strichpunktierten Linien symbolisieren die Stellen 44, an denen der Haltestreifen 40 ausgehend von dem Spalt 38 mit dem Luftsack 22 in Kontakt gerät.

Alternativ oder zusätzlich zu einer Solltrennstelle 42 kann eine Klebeverbindung zwischen Haltestreifen 40 und Luftsack 22 derart ausgebildet sein, dass der Haltestreifen 40 das Luftsackpaket 24 im zusammengefalteten Zustand des Luftsacks 22 zwar sicher zusammenhält, sich bei einem sich aufblasenden Luftsack 22 aber leicht von dem Luftsack 22 löst.

### Bezugszeichenliste

- 10: Luftsackmodul
- 16: Befestigungsabschnitt
- 20: Clipselement
- 22: Luftsack
- 24: Luftsackpaket
- 26: Schlaufe
- 30: Materialabschnitt
- 32: Ende
- 34: Öffnung
- 36: Abschnitt
- 38: Spalt
- 40: Haltestreifen
- 42: Solltrennstelle
- 44: Kontaktstelle

## Patentansprüche

1. Luftsackmodul (10) für ein Kraftfahrzeug mit einem aufblasbaren Luftsack (22), der im Montagezustand zu einem Paket (24) zusammengefaltet ist, das von einem lediglich stellenweise wirksamen Haltemittel (26, 40) zusammengehalten ist, welches verglichen mit der Paketoberfläche kleine Abmessungen aufweist und zumindest einen zusammenhängenden, verglichen mit den Abmessungen des Haltemittels (26, 40) großen Bereich der Paketoberfläche freilässt.

2. Luftsackmodul (10) nach Anspruch 1,
**dadurch gekennzeichnet, dass**
das Haltemittel (26, 40) unter Ausnutzung einer dem Luftsackpaket (24) zumindest im freigelassenen Bereich innewohnenden Formstabilität positioniert ist.

3. Luftsackmodul (10) nach Anspruch 1 oder 2,
**dadurch gekennzeichnet, dass**
das Haltemittel (26, 40) streifenförmig mit einer Breite ausgebildet ist, die wesentlich kleiner als die Länge und/oder der Umfang des Luftsackpakets (24) ist.

4. Luftsackmodul (10) nach einem der vorherigen Ansprüche,
**dadurch gekennzeichnet, dass**
der Luftsack (22) nach Art einer Rollfaltung zusammengefaltet ist.

5. Luftsackmodul (10) nach einem der vorherigen Ansprüche,
**dadurch gekennzeichnet, dass**
das Haltemittel (26) das Luftsackpaket (24) manschettenartig umgibt.

6. Luftsackmodul (10) nach einem der vorherigen Ansprüche,
**dadurch gekennzeichnet, dass**
das Haltemittel eine Schlaufe (26) oder mehrere zueinander beabstandete Schlaufen (26) umfasst.

7. Luftsackmodul (10) nach Anspruch 5 oder 6,
**dadurch gekennzeichnet, dass**
wenigstens ein Ende (32) der oder jeder Schlaufe (26) bzw. Manschette an einem insbesondere laschenartigen Befestigungsabschnitt (16) des Luftsacks (22) angebracht ist, welcher zur Befestigung des Luftsacks (22) an einem Kraftfahrzeug, insbesondere an einem Dachrahmen des Kraftfahrzeugs, vorgesehen ist.

8. Luftsackmodul (10) nach Anspruch 7,
**dadurch gekennzeichnet, dass**
das Ende (32) der oder jeder Schlaufe (26) bzw. Manschette mittels eines zur Befestigung des Luftsackmoduls (10) an einem Kraftfahrzeug vorgesehenen Befestigungsmittels (20), z.B. eines Clips, an dem Befestigungsabschnitt (16) des Luftsacks (22) angebracht ist.

9. Luftsackmodul (10) nach einem der Ansprüche 5 bis 7,
**dadurch gekennzeichnet, dass**
die oder jede Schlaufe (26) bzw. Manschette in einem zwischen ihren Enden gelegenen Bereich mit dem zusammengefalteten Luftsack (22) verklebt ist.

10. Luftsackmodul (10) nach einem der Ansprüche 1 bis 4,
**dadurch gekennzeichnet, dass**
das Haltemittel (40) lediglich solche Bereiche des Luftsacks (22) abdeckt, welche an einen durch den zusammengefalteten Luftsack (22) gebildeten Spalt (38) angrenzen.

11. Luftsackmodul (10) nach Anspruch 10,
**dadurch gekennzeichnet, dass**
das Haltemittel (40) den Spalt (38) zumindest abschnittsweise und bevorzugt über annähernd dessen gesamte Länge überbrückt.

12. Luftsackmodul (10) nach einem der vorherigen Ansprüche,
**dadurch gekennzeichnet, dass**
das Haltemittel (26, 40) im Bereich eines Endes mittels einer Klebe-, Näh-, Heft- oder Nietverbindung an dem Luftsack (22) befestigt ist.

13. Luftsackmodul (10) nach einem der vorherigen Ansprüche,
**dadurch gekennzeichnet, dass**
das Haltemittel (26, 40) ein Textilmaterial, z.B. ein Gewebe oder ein Vlies, aufweist.

14. Luftsackmodul (10) nach einem der vorherigen Ansprüche,
**dadurch gekennzeichnet, dass**
das Haltemittel (26, 40) eine Solltrennstelle (42) und insbesondere eine Reißnaht aufweist.

15. Luftsackmodul (10) nach einem der vorherigen Ansprüche,
**dadurch gekennzeichnet, dass**
das Haltemittel (26, 40) und/oder ein insbesondere laschenartiger Befestigungsabschnitt (16) des Luftsacks ein Bestandteil der entsprechend zugeschnittenen und/oder zusammengenähten Luftsackhülle ist.

## Geänderte Patentansprüche

### Geänderte Patentansprüche gemäss Regel 86(2) EPÜ.

**1.** Luftsackmodul (10) für ein Kraftfahrzeug mit einem aufblasbaren Luftsack (22), der im Montagezustand zu einem Paket (24) zusammengefaltet ist, das von einem lediglich stellenweise wirksamen Haltemittel (26, 40) zusammengehalten ist, welches verglichen mit der Paketoberfläche kleine Abmessungen aufweist und zumindest einen zusammenhängenden, verglichen mit den Abmessungen des Haltemittels (26, 40) großen Bereich der Paketoberfläche freilässt,
**dadurch gekennzeichnet, dass**
das Haltemittel (26, 40) ein Bestandteil der entsprechend zugeschnittenen und/oder zusammengenähten Luftsackhülle ist.

**2.** Luftsackmodul (10) nach Anspruch 1,
**dadurch gekennzeichnet, dass**
das Haltemittel (26, 40) unter Ausnutzung einer dem Luftsackpaket (24) zumindest im freigelassenen Bereich innewohnenden Formstabilität positioniert ist.

**3.** Luftsackmodul (10) nach Anspruch 1 oder 2,
**dadurch gekennzeichnet, dass**
das Haltemittel (26, 40) streifenförmig mit einer Breite ausgebildet ist, die wesentlich kleiner als die Länge und/oder der Umfang des Luftsackpakets (24) ist.

**4.** Luftsackmodul (10) nach einem der vorherigen Ansprüche,
**dadurch gekennzeichnet, dass**
der Luftsack (22) nach Art einer Rollfaltung zusammengefaltet ist.

**5.** Luftsackmodul (10) nach einem der vorherigen Ansprüche,
**dadurch gekennzeichnet, dass**
das Haltemittel (26) das Luftsackpaket (24) manschettenartig umgibt.

**6.** Luftsackmodul (10) nach einem der vorherigen Ansprüche,
**dadurch gekennzeichnet, dass**
das Haltemittel eine Schlaufe (26) oder mehrere zueinander beabstandete Schlaufen (26) umfasst.

**7.** Luftsackmodul (10) nach Anspruch 5 oder 6,
**dadurch gekennzeichnet, dass**
wenigstens ein Ende (32) der oder jeder Schlaufe (26) bzw. Manschette an einem insbesondere laschenartigen Befestigungsabschnitt (16) des Luftsacks (22) angebracht ist, welcher zur Befestigung des Luftsacks (22) an einem Kraftfahrzeug, insbesondere an einem Dachrahmen des Kraftfahrzeugs, vorgesehen ist.

**8.** Luftsackmodul (10) nach Anspruch 7,
**dadurch gekennzeichnet, dass**
das Ende (32) der oder jeder Schlaufe (26) bzw. Manschette mittels eines zur Befestigung des Luftsackmoduls (10) an einem Kraftfahrzeug vorgesehenen Befestigungsmittels (20), z.B. eines Clips, an dem Befestigungsabschnitt (16) des Luftsacks (22) angebracht ist.

**9.** Luftsackmodul (10) nach einem der Ansprüche 5 bis 7,
**dadurch gekennzeichnet, dass**
die oder jede Schlaufe (26) bzw. Manschette in einem zwischen ihren Enden gelegenen Bereich mit dem zusammengefalteten Luftsack (22) verklebt ist.

**10.** Luftsackmodul (10) nach einem der Ansprüche 1 bis 4,
**dadurch gekennzeichnet, dass**
das Haltemittel (40) lediglich solche Bereiche des Luftsacks (22) abdeckt, welche an einen durch den zusammengefalteten Luftsack (22) gebildeten Spalt (38) angrenzen.

**11.** Luftsackmodul (10) nach Anspruch 10,
**dadurch gekennzeichnet, dass**
das Haltemittel (40) den Spalt (38) zumindest abschnittsweise und bevorzugt über annähernd dessen gesamte Länge überbrückt.

**12.** Luftsackmodul (10) nach einem der vorherigen Ansprüche,
**dadurch gekennzeichnet, dass**
das Haltemittel (26, 40) im Bereich eines Endes mittels einer Klebe-, Näh-, Heft- oder Nietverbindung an dem Luftsack (22) befestigt ist.

**13.** Luftsackmodul (10) nach einem der vorherigen Ansprüche,
**dadurch gekennzeichnet, dass**
das Haltemittel (26, 40) ein Textilmaterial, z.B. ein Gewebe oder ein Vlies, aufweist.

**14.** Luftsackmodul (10) nach einem der vorherigen Ansprüche,
**dadurch gekennzeichnet, dass**
das Haltemittel (26, 40) eine Solltrennstelle (42) und insbesondere eine Reißnaht aufweist.

**15.** Luftsackmodul (10) nach einem der vorherigen Ansprüche,
**dadurch gekennzeichnet, dass**
ein insbesondere laschenartiger Befestigungsabschnitt (16) des Luftsacks ein Bestandteil der entsprechend zugeschnittenen und/oder zusammengenähten Luftsackhülle ist.
